# EUROPÄISCHE PATENTSCHRIFT

(11) **EP 1 245 872 B1**
(45) Veröffentlichungstag und Bekanntmachung des Hinweises auf die Patenterteilung: **14.09.2005**
(21) Anmeldenummer: 02003620.8
(22) Anmeldetag: 16.02.2002
(51) Int. Cl.: F16H 63/34, F16H 63/36

(54) **Schaltvorrichtung für ein Zahnräderwechselgetriebe, insbesondere für Kraftfahrzeuge**
Shift actuator for a change-speed gearbox, particularly for vehicles
Dispositif de commande de boîtes de vitesses, notamment pour véhicule automobile

(30) Priorität: 28.03.2001 DE 10115354
(43) Veröffentlichungstag der Anmeldung: 02.10.2002
(73) Patentinhaber: INA- Schaeffler KG, 91074 Herzogenaurach (DE)
(72) Erfinder: Steinberger, Wolfgang, 91074 Herzogenaurach (DE); Krämer, Klaus, 91460 Baudenbach (DE); Trissler, Arnold, 91074 Herzogenaurach (DE)

(56) Entgegenhaltungen:
- EP-A- 0 794 364
- DE-A- 3 640 416
- DE-A- 4 017 957
- DE-A- 4 118 931
- DE-A- 19 919 269

## Beschreibung

### Gebiet der Erfindung

Die Erfindung bezieht sich auf eine Schaltvorrichtung für ein Zahnräderwechselgetriebe, insbesondere für Kraftfahrzeuge, mit einer verdreh- und verschiebbaren Schaltwelle, an der ein Betätigungsfinger aufweisendes Schaltelement befestigt ist, mit Schaltstangen und Schaltschwingen, die einerseits mit Schaltmuffen zum Schalten der Gänge in Wirkverbindung stehen und andererseits mit je einem Betätigungsfinger derart verbindbar sind, dass eine Längsbewegung der Schaltwelle je eine Schaltstange verschiebt oder eine Schaltschwinge verschwenkt, und mit einem Lagerschild zur Lagerung der Schaltstangen.

### Hintergrund der Erfindung

Aus dem gattungsbildenden Dokument, der DE 41 18 931 A ist eine Schaltvorrichtung für ein Zahnräderwechselgetriebe bekannt, die zwei Schaltstangen umfasst. Zur Vermeidung einer Fehlschaltung ist als Verriegelungselement eine Sperrkugel vorgesehen, die in einem Gehäuse zwischen den Schaltstangen positioniert, mit Ausnehmungen der Schaltstange so zusammenwirkt. Bei einer axialen Bewegung einer Schaltwelle sperrt die Sperrkugel die jeweils andere Schaltstange, indem die Sperrkugel aus einer Eindrehung der ersten in eine Eindrehung der zweiten Schaltstange verdrängt wird.

Das Dokument EP-0 794 364 offenbart eine Schaltvorrichtung für Zahnräderwechselgetriebe, die zwar Rasteinrichtungen für die Schaltstangen, Schaltschwingen und das Schaltelement aufweist, darüber hinaus aber keine Einrichtung, die mit Sicherheit verhindert, dass gleichzeitig zwei Gänge schaltbar sind oder je nach äußeren Gegebenheiten, wie Erschütterungen oder starke negative bzw. positive Beschleunigungen, bei eingelegtem Gang ein weiterer Gang eingerückt werden kann.

### Aufgabe der Erfindung

Aufgabe der Erfindung ist es, die Mängel der bekannten Lösung zu vermeiden und eine Einrichtung zu schaffen, die sicherstellt, dass nur ein Gang eingelegt werden kann und dass nicht ungewollt, z.B. durch äußere Einflüsse hervorgerufen, ein zweiter Gang einrastet, wodurch eine Sperrung oder Totalschaden des Getriebes erfolgen oder sogar ein Unfall des Fahrzeuges verursacht werden könnte.

### Zusammenfassung der Erfindung

Die Aufgabe der Erfindung wird gelöst durch eine Sperrvorrichtung, die ein Sperrsegment umfasst, das mit der Verdrehbewegung der Schaltwelle gekuppelt und gegen Verschieben in axialer Richtung fixiert ist. Das Sperrsegment ermöglicht, dass alle die Schaltstangen und Schaltschwingen gegen Schaltbewegungen sperrbar sind, die nicht mit einem Betätigungsfinger gekuppelt sind.

Dadurch wird ist eine Schaltung mit einer hohen Schaltsicherheit erreicht, bei der jeweils nur ein Gang bzw. eine Schaltgasse, d.h. eine Schaltstange oder eine Schaltschwinge von einem Betätigungsfinger betätigt werden kann, wobei die übrigen Schaltstangen und Schaltschwingen gesperrt sind. Dadurch, dass die Sperrvorrichtung mit der Schaltwelle in Wirkverbindung steht, erfolgt die Sperrung der Schaltstangen bzw. Schaltschwingen entsprechend der Bewegung der Schaltwelle, so dass immer die Gänge gesperrt sind, bzw. die Schaltgassen verriegelt sind, mit denen kein Betätigungsfinger in Wirkverbindung steht. Bei freier Schaltungsmöglichkeit des Getriebes werden durch die Erfindung Schäden verhindert und ein ungewolltes Einlegen von zwei Gängen gegebenenfalls auch durch eine ungenaue Justage der Schaltvorrichtung vermieden.

Die erfindungsgemäße Schaltvorrichtung schließt ein Lagerschild ein, in dem das Sperrsegment koaxial zur Schaltwelle gelagert ist, das weiterhin zur Führung und Lagerung der Schaltstangen bestimmt ist. Eine genaue und wirksame Lagerung ergibt sich, wenn das Sperrsegment eine Lagerhülse aufweist, die in einer Öffnung des Lagerschildes geführt ist. Die Schaltwelle ist dabei drehbar aber verschiebbar in der Lagerhülse geführt. Die Verdrehmitnahme kann dadurch hergestellt werden, dass die Schaltwelle und die Lagerhülse pofiliert sind, die insbesondere als Zahnnabe oder als Vielkeilwelle gestaltet sind. Die Verdrehmitnahme kann aber auch dadurch hergestellt sein, dass die Schaltwelle einen Stift, vorzugsweise Kerbstift oder dergleichen trägt, der in einem oder in beidseitigen Langlöchern der Lagerhülse geführt ist.

Weitere Ausgestaltungen der Erfindung sind Gegenstand der Unteransprüche 2 bis 8.

Eine bevorzugte Bauweise sieht vor, dass das Sperrsegment Ausnehmungen und Vorsprünge aufweist, die derart mit den Schaltstangen und Schaltschwingen in Verbindung stehen, dass immer nur eine Schaltstange oder eine Schaltschwinge in Schaltrichtung der Gänge frei beweglich ist.

Durch diese Ausgestaltung bewegt sich das Sperrsegment entsprechend der Schwenkbewegung der Schaltwelle, durch die die einzelnen Gassen nacheinander abgegriffen werden, mit der Schaltwelle mit. Die Ausnehmungen und Vorsprünge sind dabei so angeordnet und ausgebildet, dass sie die Schaltstangen und Schaltschwingen entsprechend sperren bzw. freigeben.

Dadurch, dass an der Lagerhülse eine Rasteinrichtung befestigt ist, deren Rastkörper mit einem Rastsegment an der Schaltwelle in Wirkverbindung steht, ist sichergestellt, dass die Schaltwelle in Längsrichtung rastend geführt ist, so dass keine ungewollten Verschiebungen auftreten. Da durch die Verschiebung der Schaltwelle die Gänge, vorzugsweise je zwei Gänge eingelegt werden, wird vorgeschlagen, dass das Rastsegment drei Rastkerben hat, die jeweils einem Gang und einer Leerlaufstellung entsprechen. Damit eine leichte Betätigung von einer Schaltgasse zur anderen möglich ist, sollten die Rastkerben bogenförmig um die Schaltwelle ausgebildet sein, so dass in allen Schaltgassen diese Rasteinrichtung wirkt.

Um die Sperrung der Schaltschwingen mit einfachen Mitteln zu bewerkstelligen, wird vorgeschlagen, dass an den Schaltschwingen Verriegelungsstangen angelenkt sind, die mit ihren freien Enden in Öffnungen des Lagerschildes geführt sind.

Eine räumliche kompakte Lösung für die Verriegelungsstangen und ihre Verriegelung ergibt sich, wenn die Öffnungen für die Verriegelungsstangen am Lagerschild im Bereich des Sperrsegments liegen und das Sperrsegment in diesem Bereich zumindest ein Fenster zur Aufnahme der Verriegelungsstangen aufweist, das Aussparungen und Nasen hat.

In vorteilhafter Weise haben nun die Schaltstangen und die Verriegelungsstangen Nuten im Bereich des Sperrsegments und die Vorsprünge des Sperrsegments und die Nasen am Fenster des Sperrsegments sind bezüglich der Schaltstangen und der Verriegelungsstangen so versetzt, dass in jeder Schwenkstellung des Sperrsegments und damit der Schaltwelle Vorsprünge oder Nasen in allen den Nuten eingeschwenkt sind, die gesperrt sein sollen, und nur an der Stahlstange oder Verriegelungsstange eine Ausnehmung oder Aussparung vorgesehen ist, deren zugeordnete Schaltstange oder Schaltschwinge zum Schalten freigegeben ist. Durch diese Ausgestaltung wird nun sichergestellt, das jeweils nur eine Schaltstange oder eine Schaltschwinge betätigt werden kann und dass die übrigen Schaltstangen und Verriegelungsstangen, die ja die Schaltschwingen beherrschen, durch entsprechende Vorsprünge und Nasen in den Nuten gesperrt sind.

In vorteilhafter Weise sind diese Schaltstangen und die Verriegelungsstangen im Bereich der Nuten leistenartig abgeflacht. Dadurch wird der Abstand zwischen den Schaltgassen verringert, da nur eine kleine Schwenkbewegung erforderlich, um die Verriegelungsstangen und Schaltstangen zu sperren oder freizugeben.

In vorteilhafter Weise weist das Sperrsegment ein Rastsegment auf, das mit dem Rastkörper einer vorzugsweise am Lagerschild befestigten Rasteinrichtung in Wirkverbindung steht. Selbstverständlich kann die Rasteinrichtung auch am Sperrsegment befestigt sein und das Rastsegment am Lagerschild. Das Rastsegment weist in beiden Fällen so viele Rastkerben auf, wie Schaltgassen vorgesehen sind.

### Kurze Beschreibung der Zeichnung

Es zeigen:
- Figur 1: eine Seitenansicht einer Schaltvorrichtung für ein Zahnräderwechselgetriebe,
- Figur 2: eine Draufsicht einer Teilansicht der Schaltvorrichtung nach Figur 1,
- Figur 3: eine Seitenansicht einer Schaltvorrichtung gemäß dem Pfeil III in Figur 1,
- Figur 4: einen Schnitt durch die Schaltvorrichtung gemäß der Linie IV-IV in Figur 1 und
- Figur 5: einen Schnitt durch einen Teil der Schaltvorrichtung gemäß der Linie V-V in Figur 4.

### Ausführliche Beschreibung der Zeichnung

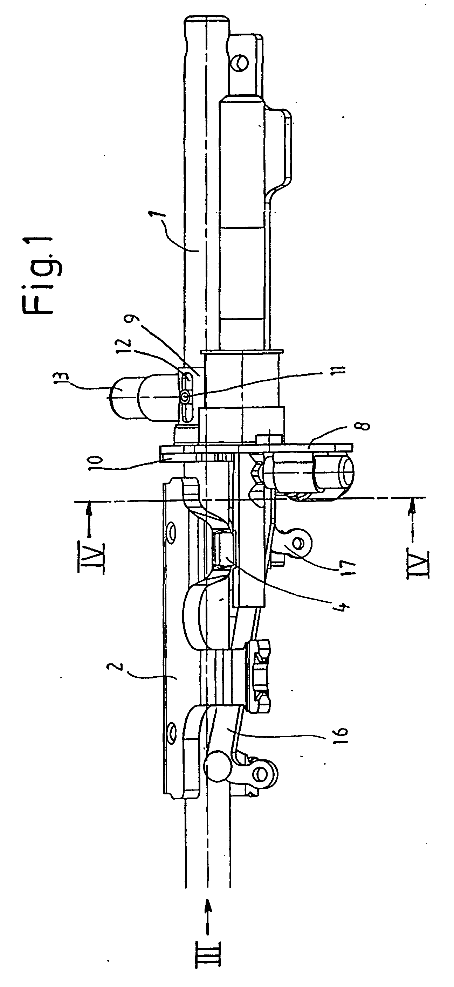

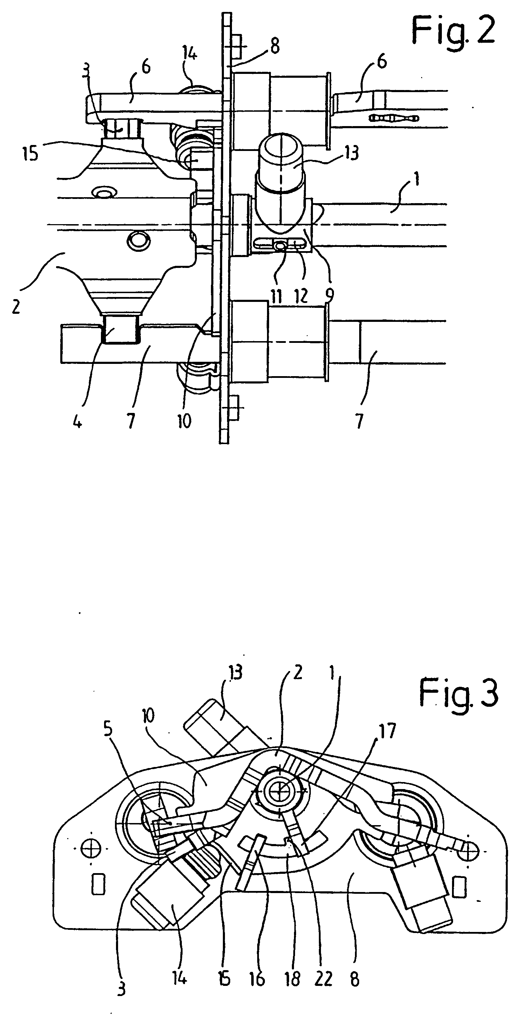

In den Figuren 1 bis 5, ist, soweit im einzelnen dargestellt, mit 1 eine Schaltwelle bezeichnet, die durch eine nicht dargestellte Betätigungseinrichtung von einem Schalthebel eines Kraftfahrzeuges in ihrer Längsrichtung verschoben und um ihre Achse verschwenkt werden kann. An der Schaltwelle ist ein Schaltelement 2 befestigt, das Betätigungsfinger 3, 4 und 5 aufweist, wobei die Betätigungsfinger 3 und 4 mit Schaltstangen 6 und 7 kuppelbar sind. Der Betätigungsfinger 5 kann, nicht dargestellt, mit einer Gabel einer Schaltschwinge gekuppelt werden. Auch der Betätigungsfinger 3 kann mit einer weiteren Gabel einer weiteren Schaltschwinge (ebenfalls nicht dargestellt) zusätzlich zur Schaltstange 6 gekuppelt werden. Die Schaltvorrichtung zur Betätigung von zwei Schaltstangen und zwei Schwingen ist so ausgelegt, dass sechs Gänge und ein Rückwärtsgang oder auch sieben Gänge und ein Rückwärtsgang geschaltet werden können. Es sei aber darauf hingewiesen, dass die Schaltvorrichtung und die zugehörige Sperrvorrichtung nicht auf diese Gangzahl beschränkt ist. Sie kann auch auf eine andere Anzahl von Gängen ausgelegt werden und mehr als 4 oder weniger als 4 Schaltgassen haben.

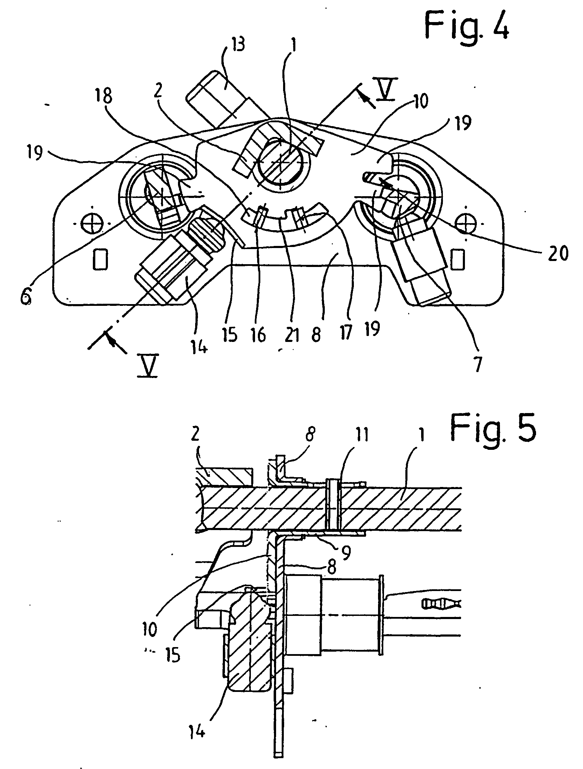

Sowohl die Schaltstangen 6 und 7 als auch die Schaltwelle 1 sind an einem Lagerschild 8 gelagert, wobei die Lagerung der Schaltwelle 1 im Lagerschild indirekt, d.h. unter Zwischenschaltung einer Lagerhülse 9 erfolgt, die mit einem Sperrsegment 10 verbunden, vorzugsweise einstückig mit diesem hergestellt ist. Das Sperrsegment beziehungsweise die Lagerhülse ist vorzugsweise über einen in Figur 5 angedeuteten Federring axial am Lagerschild befestigt. In der Schaltwelle 1 ist ein Federstift 11 eingesetzt (siehe Figuren 1, 2 und 5), der in ein Langloch 12 der Lagerhülse 9 ragt. Dadurch sind die Schaltwelle 1 und das Sperrsegment 10 drehfest gegeneinander fixiert.

Weiterhin ist an der Lagerhülse 9 ein mit 13 bezeichnetes Rastelement befestigt, dessen Rastkörper, nicht näher dargestellt, mit Rastsegmenten an der Schaltwelle 1 in Wirkverbindung steht, so dass die Schaltwelle in Rastpositionen, vorzugsweise drei Rastpositionen, in ihrer Längsrichtung festlegbar ist. Weiterhin ist mit 14 eine Rasteinrichtung bezeichnet, die an dem Lagerschild befestigt und deren Rastkörper mit einem Rastsegment 15 an dem Sperrsegment 10 in Wirkverbindung steht, so dass die Schwenkbewegungen des Sperrsegments und damit auch die Schwenkbewegungen der Schaltwelle rastend festgelegt sind.

Mit 16 und 17 sind Verriegelungsstangen bezeichnet, die nicht näher dargestellt, mit den schon angesprochenen, nicht dargestellten Schaltschwingen in Wirkverbindung stehen. Die Verriegelungsstangen sind - dies ist in Figur 4 angedeutet - in Öffnungen des Lagerschildes geführt und reichen durch ein Fenster 18 am Sperrsegment 10 hindurch.

Das Sperrsegment 10 weist weiterhin am äußeren Rand Vorsprünge 19 und eine Ausnehmung 20 sowie am Fenster Nasen 21 und Aussparungen 22 auf. Die Vorsprünge 19, Ausnehmung 20 sowie Nasen 21 und Aussparungen 22 korrespondieren mit Nuten in den Schaltstangen 6 und 7 sowie in den Verriegelungsstangen 16 und 17. In Figur 4 ist an der Schaltstange 6 eine Nut dargestellt und an der Stahlstange 7 eine Nut nur indirekt zu erkennen.

Die Schaltstangen 6 und 7 sind im Bereich der Nuten abgeflacht, so dass eine verhältnismäßig kleine Schwenkbewegung des Sperrsegments 10 die Schaltstangen freigibt bzw. sperrt.

Die Vorsprünge 19 und die Ausnehmung 20 sowie die Nasen 21 und Aussparungen 22 sind in Schwenkrichtung des Sperrsegments in Verbindung mit der zugeordneten Lage der Schaltstangen 6 und 7 und der Verriegelungsstangen 16 und 7 so angeordnet, das jeweils die Schaltstangen 6 oder 7 beziehungsweise Verriegelungsstangen 16 oder 17 gesperrt sind, die nicht, beziehungsweise deren Schaltschwingen nicht, mit einem Betätigungsfinger gekuppelt sind.

### Bezugszahlenliste

- 1: Schaltwelle
- 2: Schaltelement
- 3: Betätigungsfinger
- 4: Betätigungsfinger
- 5: Betätigungsfinger
- 6: Schaltstange
- 7: Schaltstange
- 8: Lagerschild
- 9: Lagerhülse
- 10: Sperrsegment
- 11: Federstift
- 12: Langloch
- 13: Rastelement
- 14: Rasteinrichtung
- 15: Rastsegment
- 16: Verriegelungsstange
- 17: Verriegelungsstange
- 18: Fenster
- 19: Vorsprünge
- 20: Ausnehmung
- 21: Nasen
- 22: Aussparungen

## Patentansprüche

1. Schaltvorrichtung für ein Zahnräderwechselgetriebe, insbesondere für Kraftfahrzeuge, mit einer verdreh- und verschiebbaren Schaltwelle (1), an der ein Betätigungsfinger (3, 4 und 5) aufweisendes Schaltelement (2) befestigt ist, mit Schaltstangen (6,7) und Schaltschwingen, die einerseits mit Schaltmuffen zum Schalten der Gänge in Wirkverbindung stehen und andererseits mit je einem Betätigungsfinger (3, 4 oder 5) derart verbindbar sind, dass eine Längsbewegung der Schaltwelle (1) je eine Schaltstange (6 oder 7) verschiebt oder eine Schaltschwinge verschwenkt und die Schaltvorrichtung weiterhin eine Sperrvorrichtung mit einem Sperrsegment (10) einschließt, die eine Fehlschaltung der Schaltstangen (6, 7) vermeidet **dadurch gekennzeichnet, dass** das Sperrsegment (10) bei einer Verdrehbewegung mit der Schaltwelle (1) gekuppelt und gegen Verschieben der Schaltwelle (12) in axialer Richtung fixiert ist und das Sperrsegment (10) eine Schaltbewegung der Schaltstangen (6 oder 7), der Schaltschwingen und der Schaltwelle (1) sperrt, bei der eines dieser Bauteile mit einem Betätigungsfinger (3, 4 oder 5) gekuppelt ist und die Schaltvorrichtung zur Lagerung der Schaltstangen (6,7) und der Schaltwelle (12) ein Lagerschild (8) einschließt, in dem die Schaltwelle (12) über eine Lagerhülse (9) in einer Öffnung geführt ist und weiterhin das Sperrsegment (10) koaxial zu der drehfest und verschiebbaren Schaltwelle (12) an dem Lagerschild (8) positioniert ist.

2. Schaltvorrichtung nach einem Ansprüche 1, **dadurch gekennzeichnet, dass** das Sperrsegment (10) eine Ausnehmung (20) und Vorsprünge (19) aufweist, die derart mit den Schaltstangen (6 und 7) und Schaltschwingen in Verbindung stehen, dass immer nur eine Schaltstange (6 oder 7) oder eine Schaltschwinge in Schaltrichtung der Gänge frei bewegbar ist.

3. Schaltvorrichtung nach Anspruch 1, **dadurch gekennzeichnet, dass** an der Lagerhülse (9) ein Rastelement (13) befestigt ist, dessen Rastkörper mit einem Rastsegment an der Schaltstange (1) in Wirkverbindung steht.

4. Schaltvorrichtung nach Anspruch 1, **dadurch gekennzeichnet, dass** an den Schaltschwingen Verriegelungsstangen (16 und 17) angelenkt sind, die mit ihren anderen Enden in Öffnungen des Lagerschildes (8) geführt sind.

5. Schaltvorrichtung nach Anspruch 4, **dadurch gekennzeichnet, dass** das Sperrsegment (10) im Bereich der Öffnungen für die Verriegelungsstangen (16 und 17) zumindest ein Fenster (18) zur Aufnahme der Verriegelungsstangen (16 und 17) aufweist, das Aussparungen (22) und Nasen (21) hat.

6. Schaltvorrichtung nach einem der vorhergehenden Ansprüche, **dadurch gekennzeichnet, dass** die Schaltstangen (6 und 7) und die Verriegelungsstangen (16 und 17) Nuten im Bereich des Sperrsegments (10) aufweisen und dass die Vorsprünge (19) des Sperrsegments und die Nasen (21) am Fenster (18) des Sperrsegments (10) bezüglich der Schaltstangen (6 und 7) und der Verriegelungsstangen (16 und 17) so versetzt sind, dass in jeder Schwenkstellung des Sperrsegments (10) und damit der Schaltwelle (1) Vorsprünge (19) und Nasen (21) in allen den Nuten eingeschwenkt sind, die gesperrt sein sollen, und nur an der Schaltstange (6 oder 7) oder Verriegelungsstange (16 oder 17) eine Ausnehmung (20) oder Aussparung (22) vorgesehen ist, deren zugeordnete Schaltstange (6 oder 7) oder Schaltschwinge zum Schalten freigegeben ist.

7. Schaltvorrichtung nach Anspruch 6, **dadurch gekennzeichnet, dass** die Schaltstangen (6 und 7) und / oder die Verriegelungsstangen (16 und 17) im Bereich der Nuten leistenartig abgeflacht sind.

8. Schaltvorrichtung nach Anspruch 1, **dadurch gekennzeichnet, dass** das Sperrsegment (10) ein Rastsegment (15) aufweist, das mit dem Rastkörper einer am Lagerschild (8) befestigten Rasteinrichtung (14) in Wirkverbindung steht.

## Claims

1. Gearshift apparatus for a speed-change gearbox, especially for motor vehicles, comprising a pivotable and displaceable gearshift shaft (1) to which a gearshift element (2) having actuating fingers (3, 4 and 5) is fastened, comprising gearshift rods (6, 7) and gearshift rocker arms, which, on the one hand, are operatively connected to gearshift sleeves for changing of the gears and, on the other hand, can be connected to a respective actuating finger (3, 4 or 5) in such a way that a longitudinal motion of the gearshift shaft (1) displaces a respective gearshift rod (6 or 7) or pivots a gearshift rocker arm, and the gearshift apparatus additionally includes a blocking apparatus having a blocking segment (10), which blocking apparatus prevents faulty switching of the gearshift rods (6, 7), **characterized in that** the blocking segment (10), during a torsional motion, is coupled to the gearshift shaft (1) and is fixed against displacement of the gearshift shaft (12) in the axial direction, and the blocking segment (10) blocks a gearshift motion of the gearshift rods (6 or 7), of the gearshift rocker arms and of the gearshift shaft (1), in which motion one of these components is coupled to an actuating finger (3, 4 or 5), and the gearshift apparatus, for the mounting of the gearshift rods (6, 7) and of the gearshift shaft (12), includes a bearing plate (8), in which the gearshift shaft (12) is guided in an opening by a bearing sleeve (9) and, in addition, the blocking segment (10) is positioned on the bearing plate (8) coaxially to the rotationally secure and displaceable gearshift shaft (12).

2. Gearshift apparatus according to Claim 1, **characterized in that** the blocking segment (10) has a recess (20) and projections (19), which latter are connected to the gearshift rods (6 and 7) and gearshift rocker arms in such a way that only one gearshift rod (6 or 7) or one gearshift rocker arm is ever freely movable in the gear-change direction of the gears.

3. Gearshift apparatus according to Claim 1, **characterized in that** fastened to the bearing sleeve (9) is a latching element (13), the latching body of which is operatively connected to a latching segment on the gearshift rod (6 or 7).

4. Gearshift apparatus according to Claim 1, **characterized in that** linked to the gearshift rocker arms are locking rods (16 and 17), which, by their other ends, are guided in openings in the bearing plate (8).

5. Gearshift apparatus according to Claim 4, **characterized in that** the blocking segment (10), in the region of the openings for the locking rods (16 and 17), has at least one window (18) for the reception of the locking rods (16 and 17), which window has notches (22) and bosses (21).

6. Gearshift apparatus according to one of the preceding claims, **characterized in that** the gearshift rods (6 and 7) and the locking rods (16 and 17) have grooves in the region of the blocking segment (10), and **in that** the projections (19) of the blocking segment and the bosses (21) on the window (18) of the blocking segment (10) are offset with respect to the gearshift rods (6 and 7) and the locking rods (16 and 17) such that, in each swivel setting of the blocking segment (10), and hence of the gearshift shaft (1), projections (19) and bosses (21) are swivelled in place in all the grooves which are intended to be blocked, and only on the gearshift rod (6 or 7) or locking rod (16 or 17) is there a recess (20) or notch (22) provided, the assigned gearshift rod (6 or 7) or gearshift rocker arm of which is freed for gear-changing purposes.

7. Gearshift apparatus according to Claim 6, **characterized in that** the gearshift rods (6 and 7) and/or the locking rods (16 and 17) are flattened off in the region of the grooves, in the style of a slat.

8. Gearshift apparatus according to Claim 1, **characterized in that** the blocking segment (10) has a latching segment (15), which is operatively connected to the latching body of a latching device (14) fastened to the bearing plate (8).

## Revendications

1. Dispositif de changement de vitesse pour une boîte de vitesses à engrenages, notamment pour véhicules automobiles, comprenant un arbre de changement de vitesses rotatif et coulissant (1), sur lequel est fixé un élément de changement de vitesses (2) présentant des doigts d'actionnement (3, 4 et 5), avec des tringles de changement de vitesses (6, 7) et des fourchettes de changement de vitesses, qui sont en liaison coopérante d'une part avec des manchons de changement de vitesses pour passer les vitesses et qui peuvent être connectées d'autre part à un doigt d'actionnement respectif (3, 4 ou 5) de telle sorte qu'un déplacement longitudinal de l'arbre de changement de vitesses (1) déplace une tringle de changement de vitesses respective (6 ou 7) ou fasse pivoter une fourchette de changement de vitesses et le dispositif de changement de vitesses inclut en outre un dispositif de blocage avec un segment de blocage (10), qui évite un mauvais enclenchement des tringles de changement de vitesses (6, 7), **caractérisé en ce que** le segment de blocage (10) est accouplé à l'arbre de changement de vitesses (1) au cours d'un mouvement de rotation et est fixé contre le coulissement de l'arbre de changement de vitesses (12) dans la direction axiale et le segment de blocage (10) bloque un mouvement de changement de vitesses des tringles de changement de vitesses (6 ou 7), des fourchettes de changement de vitesses et de l'arbre de changement de vitesses (1), l'un de ces composants étant accouplé à un doigt d'actionnement (3, 4 ou 5) et le dispositif de changement de vitesses incluant un support de palier (8) pour supporter les tringles de changement de vitesses (6, 7) et l'arbre de changement de vitesses (12), dans lequel l'arbre de changement de vitesses (12) est guidé dans une ouverture par le biais d'une douille-palier (9) et le segment de blocage (10) étant en outre positionné sur le support de palier (8) coaxialement à l'arbre de changement de vitesses (12) coulissant et fixe en rotation.

2. Dispositif de changement de vitesses selon la revendication 1, **caractérisé en ce que** le segment de blocage (10) présente un logement (20) et des saillies (19) qui sont en liaison avec les tringles de changement de vitesses (6 et 7) et les fourchettes de changement de vitesses de telle sorte que seulement une tringle de changement de vitesses (6 ou 7) ou une fourchette de changement de vitesses soit à chaque fois librement déplaçable dans la direction de changement de vitesses des rapports.

3. Dispositif de changement de vitesses selon la revendication 1, **caractérisé en ce qu'**un élément d'encliquetage (13) est fixé sur la douille-palier (9), son corps d'encliquetage étant en liaison coopérante avec un segment d'encliquetage sur la tringle de changement de vitesses (6 ou 7).

4. Dispositif de changement de vitesses selon la revendication 1, **caractérisé en ce que** des tringles de verrouillage (16 et 17) sont articulées sur les fourchettes de changement de vitesses et sont guidées avec leurs autres extrémités dans des ouvertures du support de palier (8).

5. Dispositif de changement de vitesses selon la revendication 4, **caractérisé en ce que** le segment de blocage (10) dans la région des ouvertures pour les tringles de verrouillage (16 et 17) présente au moins une fenêtre (18) pour recevoir les tringles de verrouillage (16 et 17), laquelle a des évidements (22) et des nez (21).

6. Dispositif de changement de vitesses selon l'une quelconque des revendications précédentes, **caractérisé en ce que** les tringles de changement de vitesses (6 et 7) et les tringles de verrouillage (16 et 17) présentent des rainures dans la région du segment de blocage (10) et **en ce que** les saillies (19) du segment de blocage et les nez (21) sur la fenêtre (18) du segment de blocage (10) sont décalés par rapport aux tringles de changement de vitesses (6 et 7) et aux tringles de verrouillage (16 et 17) de telle sorte que dans chaque position de pivotement du segment de blocage (10) et donc de l'arbre de changement de vitesses (1), des saillies (19) et des nez (21) soient pivotés dans toutes les rainures qui doivent être bloquées et que seulement sur la tringle de changement de vitesses (6 ou 7) ou sur la tringle de verrouillage (16 ou 17) soit prévu un logement (20) ou un évidement (22) dont la tringle de changement de vitesses (6 ou 7) ou fourchette de changement de vitesses associée est libérée en vue du changement de vitesses.

7. Dispositif de changement de vitesses selon la revendication 6, **caractérisé en ce que** les tringles de changement de vitesses (6 et 7) et/ou les tringles de verrouillage (16 et 17) sont aplaties en forme de baguettes dans la région des rainures.

8. Dispositif de changement de vitesses selon la revendication 1, **caractérisé en ce que** le segment de blocage (10) présente un segment d'encliquetage (15) qui est en liaison coopérante avec le corps d'encliquetage d'un dispositif d'encliquetage (14) fixé sur le support de palier (8).
